# EUROPÄISCHE PATENTANMELDUNG

(11) **EP 0 978 483 A1**
(43) Veröffentlichungstag der Anmeldung: **09.02.2000**
(21) Anmeldenummer: 99115076.4
(22) Anmeldetag: 05.08.1999
(51) Int. Cl.: C02F 9/00

(54) **Verfahren und Vorrichtung zur Reinigung von Regen- und/oder Mischwasser**

(30) Priorität: 05.08.1998 DE 19835458
(71) Anmelder: Fraunhofer-Gesellschaft zur Förderung der angewandten Forschung e.V., 80636 München (DE)
(72) Erfinder: Fandrich, Reinhard, Dipl.Ing., 46242 Bottrop (DE); Heil, Volker, Dipl.Ing., 44147 Dortmund (DE); Guderian, Joachim, Dr.Ing., 44579 Castrop-Rauxel (DE)
(74) Vertreter: Pfenning, Meinig & Partner GbR

(57) **Zusammenfassung**

Die Erfindung betrifft ein Verfahren und eine entsprechend ausgebildete Vorrichtung, die in der Lage ist, sowohl Mischwasser, bestehend aus Abwasser und in die normale Kanalisation eingeleitetes Regenwasser als auch reines Regenwasser soweit vorzureinigen, daß ein großer Teil dieses Wassers ohne weiteres in natürliche Gewässer oder als Oberflächenwasser abgeleitet werden kann. Das zu reinigende Wasser kann direkt einem Kanalsystem entnommen werden oder aber als Überlaufwasser aus Regenüberlaufbecken anfallen. Das feststoffbelastete Regen- oder Mischwasser aus einem Kanalsystem und/oder für Überlaufwasser wird einer groben Fest-Flüssigkeitstrennstufe (2) zur Trennung von Feststoffen mit einem Trennkorndurchmesser im Millimeterbereich und nachfolgend einer Mikrofiltration (5) zur Schwebstoffabtrennung zugeführt. Die abgetrennten Feststoffe können zumindest teilweise mit dem Retentat über das Kanalsystem (7) einer Kläranlage zugeführt und das gereinigte Wasser kann in natürliche Gewässer geleitet oder als Oberflächenwasser abgeführt werden.

## Beschreibung

Die Erfindung betrifft ein Verfahren und eine entsprechend ausgebildete Vorrichtung nach dem Oberbegriff des Anspruchs 1, die in der Lage ist, sowohl Mischwasser, bestehend aus Abwasser und in die normale Kanalisation eingeleitetes Regenwasser als auch reines Regenwasser soweit vorzureinigen, daß ein großer Teil dieses Wassers ohne weiteres in natürliche Gewässer oder als Oberflächenwasser abgeleitet werden kann. Das zu reinigende Wasser kann direkt einem Kanalsystem entnommen werden oder aber als Überlaufwasser aus Regenüberlaufbecken anfallen.

Bisher ist es üblich, in relativ urbanisierten Gegenden auf dieser Welt, die Abwässer im sog. Mischsystem zu entwässern. Dies bedeutet, sowohl kommunales Abwasser, wie auch Regenwasser werden gemeinsam über ein Kanalisationssystem erfaßt und dann Kläranlagen zugeführt. Vernünftigerweise werden jedoch diese Kläranlagen so dimensioniert, daß infolge von Regenfällen der erhöhte Mischwasseranteil berücksichtigt wird und dementsprechend der ca. doppelte Trockenwetterzufluß in einer solchen Kläranlage behandelt werden kann. Bei Regenfällen mit überdurchschnittlich hohem Wasseraufkommen sollen Überlastungen des Kanalisationssystems und der jeweiligen Kläranlage dadurch vermieden werden, daß entsprechendes Überschußwasser, das einen erhöhten Anteil an Regenwasser aufweist, nahezu unbehandelt, entweder in natürliche Gewässer geleitet oder als Oberflächenwasser entsorgt wird. Dabei können bis zu 40 % des Regenwassers auf diese Art und Weise an der Kläranlage vorbeigeführt werden.

Außerdem ist es üblich, zur Speicherung Regenüberlaufbecken zu verwenden. Ein entsprechendes Speichervolumen eines solchen Regenüberlaufbeckens beträgt ca. 20 bis 40 m³/ha angeschlossener (reduzierter) Fläche. In dem Regenüberlaufbecken soll ein Schmutzfrachtrückhalt erzielt werden.

Die Regenüberlaufbecken können jedoch nicht vollständig sichern, daß eine ausreichende Gewässergüte erhalten bleibt, wenn das Überlaufwasser ohne weitere Behandlung eingeleitet wird. Die niederschlagsbedingten stoßweisen Belastungen sind insbesondere aus limnologischer Sicht bedenklich, da das Zulaufwasser ein Sauerstoffdefizit aufweisen und das Verstopfen des Lückensystems an der Gewässersohle durch partikuläre Stoffe und der Eintrag von persistenten, bioakkumulationsfähigen Substanzen besonders negativ wirken kann (vgl. G. Mehlhart; C. Steltmann; "Niederschlagsbedingte Belastungen von Fließgewässern"; Korrespondenz Abwasser 41 (1994), Heft 11, Seiten 1994 bis 2003).

Der Regenwasseranteil des Mischwassers wirkt jedoch nicht nur verdünnend, sondern er enthält, insbesondere durch die Aufnahme von von Verkehrs- und Parkplatzflächen abfließenden Regenwassers, eine doch beachtliche Menge an Wasser, das feinpartikuläre Schwebstoffe aufweist, an denen Schadstoffe anhaften. Solche Schadstoffe, die besonders kritisch zu bewerten sind, sind z.B. Schwermetalle (vgl. C. Xantophoulos; H.H. Hahn; "Neuere Untersuchungen zur Verschmutzung des Regen- und Mischwasserabflusses"; Wasser-Abwasser-Praxis 4 (1995); Heft 4, Seiten 40 bis 44).

Beachtlich ist außerdem, daß etwa 5 bis 10 % des anfallenden Regenwassers aus den Regenüberlaufbecken direkt und 30 bis 35 % indirekt über den Klärüberlauf in Gewässer abgeleitet werden.

Die Verwendung von Regenüberlaufbecken verhindert bzw. reduziert dementsprechend nicht die Einleitung abfiltrierbarer Bestandteile des Mischwassers, wie z.B. Papierschwebstoffe, feinstverteilte Fäkalienreste. Diese abfiltrierbaren Bestandteile beeinflussen jedoch besonders stark die Qualität natürlicher Gewässer. Durchschnittliche Überlaufkonzentrationen in Regenüberlauf von Regenüberlaufbecken liegen je nach Abfluß wirksamer Niederschlagsmenge bei 80 bis 180 mg/l chemischer Sauerstoffbedarf (CSB), 30 bis 60 mg/l biologischer Sauerstoffbedarf (BSB) und 165 bis 370 mg/l abfiltrierbarer Bestandteile (AFS). Die unteren angegebenen Grenzwerte entsprechen dabei einem flächebzogenen Mischwasserzufluß Q = 2.700 m³/ha*a und die oberen Grenzwerte einem Wert Q = 6.000 m³/ha*a.

Es ist daher Aufgabe der Erfindung, ein Verfahren und eine entsprechend ausgebildete Vorrichtung zur Verfügung zu stellen, mit dem/der infolge der Verringerung des Feststoffanteiles die Gewässerbelastung beträchtlich verringert werden kann.

Erfindungsgemäß wird diese Aufgabe mit den Merkmalen des Anspruchs 1 für das erfindungsgemäße Verfahren und den Merkmalen des Anspruchs 9 für eine entsprechend ausgebildete Vorrichtung gelöst.

Mit der erfindungsgemäßen Lösung ist es möglich, nicht nur den Feststoffgehalt allein, sondern auch chemische Stofffkomponenten sowie erhebliche Mengen patogener Keime zu verringern und gegebenenfalls sogar gänzlich auf Regenüberlaufbecken zu verzichten, die sich bisher in hohen Kosten niederschlagen.

Dabei ist zu berücksichtigen, daß durch allein eine 70 %-ige Reduzierung der abfiltrierbaren Bestandteile, die im Mischwasser enthalten sein können, gleichzeitig eine ca. 30 %-ige Reduzierung der CSB- bzw. BSB-Konzentrationen erreichen läßt. Bei vielen Mischwasserzusammensetzungen kann auch eine CSB-Konzentrationssreduzierung bis in den Bereich der Reduzierung der abfiltrierbaren Bestandteile erreicht werden.

Erfindungsgemäß wird dabei so verfahren bzw. vorgegangen, daß das Mischwasser dem Kanalisationssystem entnommen oder das Regenüberlaufwasser einer groben Fest-Flüssigkeitstrennstufe und nachfolgend einer Mikrofiltration zugeführt wird. Das so gereinigte Wasser kann dann in natürliche Gewässer geleitet oder als Oberflächenwasser abgeführt werden und das anfallende Retentat wieder über das Kanalsystem in Kläranlagen geführt werden, wo die entsprechende Reinigung durchgeführt werden kann.

Vorteilhaft ist es, das zu reinigende Wasser mit erhöhtem Druck der Fest-Flüssigkeitstrennstufe zuzuführen, wobei diese für einen Trennkorndurchmesser im Bereich zwischen 0,5 bis 3 mm ausgelegt werden sollte.

Das entsprechend vorgereinigte Wasser kann dann nachfolgend der Mikrofiltration, wieder mit einem erhöhten Druck, zugeführt werden. Dieser Druck sollte so eingestellt werden, daß in der Mikrofiltration gesichert wird, daß eine Deckschichtbildung abgelagerter Feststoffe verhindert werden kann. Hierfür wird die Ausbildung einer turbulenten Strömung in bzw. vor der Mikrofiltration ausgenutzt, die die Ausbildung des sog. Filterkuchens verhindert bzw. jedoch stark behindert.

In der Mikrofiltration sollte die Möglichkeit bestehen, Feststoffe, die noch im bereits vorgereinigten zu behandelnden Wasser, insbesondere als Schwebstoffe enthalten sind, mit einem Trennkorndurchmesser zwischen 0,5 und 100 µm zu separieren.

Zwischen Fest-Flüssigkeitstrennstufe und Mikrofiltration kann ein Pufferbehälter angeordnet sein, in dem auch eine Sedimentation durchführbar ist.

Mit der Erfindung besteht auch die Möglichkeit, zumindestens einen Teil des Schwebstoffe enthaltenden Retentats aus der Mikrofiltration über eine Bypassleitung und dem der Mikrofiltration vorgeschalteten Pufferbehälter im Kreislauf zu führen. Dies führt dazu, daß eine Aufkonzentration an Feststoffen, d.h. an abfiltrierbaren Bestandteilen innerhalb dieses Bypasskreislaufes auftritt und durch die Kreislaufführung wird außerdem erreicht, daß eine Durchströmung in turbulenter Form innerhalb der Mikrofiltration, die der bereits erwähnten Deckschichtbildung (Filterkuchen) entgegenwirkt, permanent erhalten bleibt. Es ist jedoch trotzdem gesichert, daß ein Teil des mit Feststoffen beladenen Abwassers über die Kanalisation der Kläranlage zugeführt wird.

Die bereits erwähnte Druckbeaufschlagung des jeweils zu behandelnden Wassers kann einmal unter Verwendung von Pumpen oder je nach örtlichen Gegebenheiten auch allein oder zum Teil unter Ausnutzung einer geodätischen Höhendifferenz erfolgen, wobei hierfür auch eine Kombination mit einer Pumpe denkbar ist.

Für die relativ grobe Reinigung mit der Fest-Flüssigkeitstrennstufe können statische, selbstreinigende Filter verwendet werden. Möglichkeiten hierfür sind bekannte Bogensiebe, Hydrozyklone, Feinstrechen, Siebtrommeln, Filtertrommeln, die jeweils allein oder in Kombination mehrerer solcher Elemente Verwendung finden können. Dabei ist auch eine Kombination der genannten verschiedenen Elemente geeignet.

Nach dieser Grobreinigung kann die Abtrennung der insbesondere als Schwebstoffe enthaltenen Feinfraktionen mit einem hier sog. Querfiltrationsapparat durchgeführt werden. Ein solcher Querfiltrationsapparat kann aus mehreren Querstrom-Mikrofiltrationsmodulen, die bevorzugt röhrenförmig ausgebildet sind, bestehen. Mehrere solcher röhrenförmiger Module können hierbei in einer Reihen- oder einer Parallelanordnung verwendet werden, wobei entsprechend der erforderlichen Kapazität auch eine Parallelanordnung mehrerer in Reihe angeordneter solcher Module eingesetzt werden kann.

Das noch nachzureinigende belastete Wasser wird durch das Innere eines solchen röhrenförmig ausgebildeten Moduls geleitet, und das weitestgehend von Schwebstoffen befreite Wasser kann radial nach außen durch den als Filter ausgebildeten Mantel geführt und abgeleitet werden.

Diese rohrförmigen Module können z.B. aus einem Drahtmaschengewebe bestehen, das eine Maschenweite zwischen 1 und 100 µm aufweist. Die Drahtmaschengewebe können sowohl aus geeigneten Metallen, aber auch aus resistenten Kunststoffen bestehen.

Nachfolgend soll die Erfindung beispielhaft beschrieben werden.

Dabei zeigen:
- Figur 1: ein Blockschaltbild einer erfindungsgemäßen Vorrichtung und
- Figur 2: ein rohrförmiges Mikrofiltrationsmodul.

Aus der Kanalisation 7 wird unter Verwendung einer Pumpe 1 Feststoff belastetes Mischwasser oder, in nicht dargestellter Form, Regenüberlaufwasser in eine Fest-Flüssigkeitstrennstufe 2 zur Abtrennung relativ grober Bestandteile im Wasser geführt. Der mit separierten groben Feststoffen beladene Albwasseranteil wird als Retentat wieder in die Kanalisation 7 geführt und der vorgereinigte Wasseranteil gelangt bei diesem Beispiel in den Pufferbehälter 3. Bei diesem Beispiel ist im Pufferbehälter 3 eine Füllstandsregelung vorgesehen, die sichert, daß zu behandelndes Abwasser in ausreichendem Maße, d.h. mit ausreichendem Volumenstrom, mittels der Pumpe 4 der Mikrofiltration 5 zugeführt wird. Mit der Pumpe 4 wird ein so großer Druck aufgebaut, daß vor den Filtern der Mikrofiltration 5 ein Druck erreicht wird, der eine turbulente Strömung sichert, um die Ausbildung einer Deckschicht, die die Filter zusetzen kann, zu verhindern.

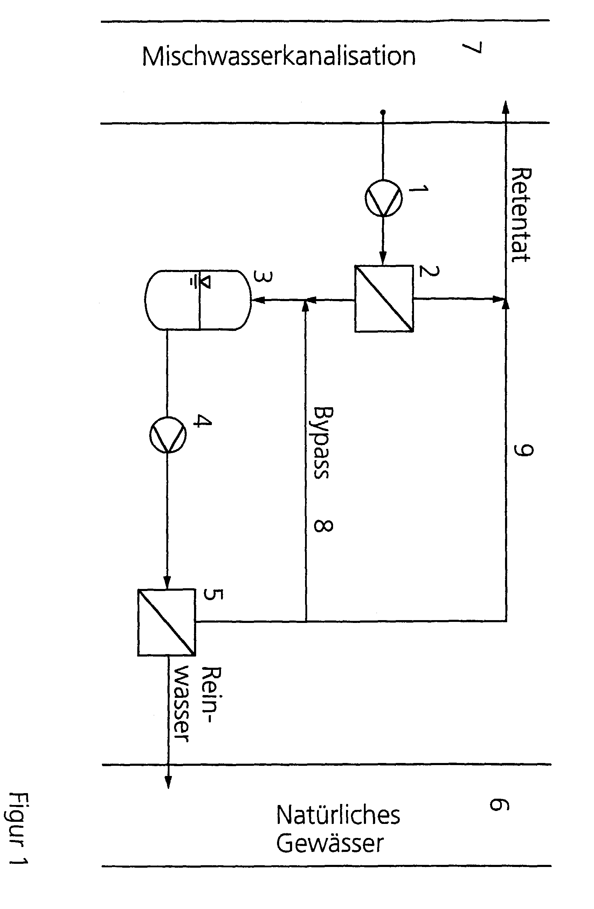

Das auch von sehr feinen Schwebstoffen befreite Wasser kann dann, wie ebenfalls in Figur 1 dargestellt, als Reinwasser in natürliche Gewässer oder als Oberflächenwasser abgeleitet werden, ohne daß eine beträchtliche Schädigung der Umwelt zu verzeichnen ist. Das mit seinen Partikeln beladene Retentat wird aus der Mikrofiltration 5 abgeführt und gelangt einmal über eine Bypassleitung 8 im Kreislauf geführt wieder über Pufferbehälter 3, Pumpe 4 zur Mikrofiltration 5 und ein anderer Teil des Retentates kommt über die Leitung 9, die Kanalisation 7 zur nicht dargestellten Kläranlage.

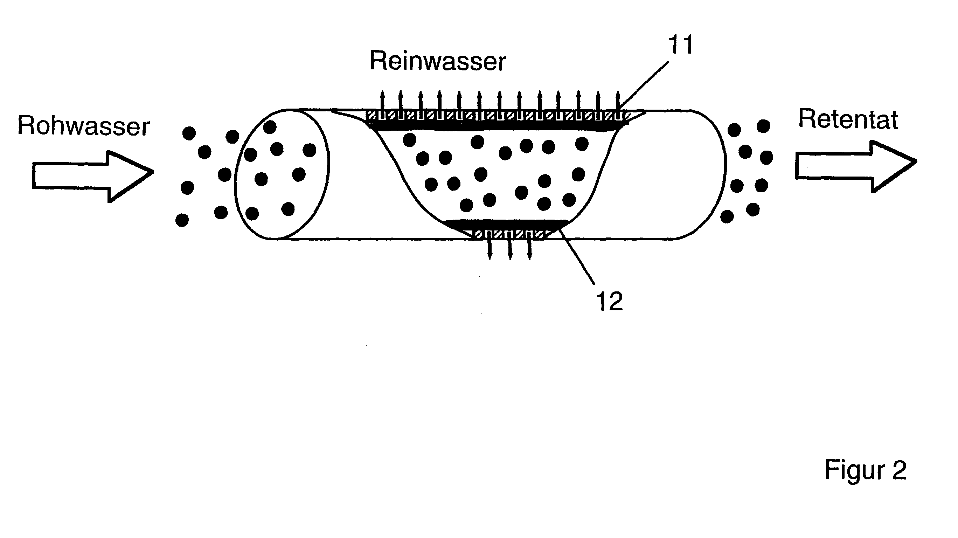

In der Figur 2 ist eine schematische Darstellung eines röhrförmigen Querstrom-Mikrofiltrationsmoduls gezeigt.

Das mit feinen Partikeln beladene Rohwasser aus der Fest-Flüssigkeitstrennstufe 2 wird an einer Stirnseite eingeführt. Die Mantelfläche ist aus einem Filtermaterial 11 gebildet, das, wie bereits im allgemeinen Teil der Beschreibung erwähnt, als Drahtmaschengewebe ausgebildet sein kann. Durch dieses Filtermaterial kann Wasser radial nach außen geführt werden, das nahezu partikelfrei ist. Das Filtermaterial 11 kann mit einer wasserpermeablen Deckschicht 12 beschichtet sein. Das Feststoffpartikel behaftete Retentat kann an der anderen Stirnfläche des rohrförmigen Mikrofiltrationsmoduls über die Bypassleitung im Kreislauf oder in die Kanalisation 7 abgeführt werden.

## Patentansprüche

1. Verfahren zur Reinigung von Regen- oder Mischwasser aus einem Kanalsystem und/oder für Überlaufwasser aus Regenüberlaufbecken,
**dadurch gekennzeichnet,**
daß einem Kanalsystem (7) oder einem Regenüberlaufbecken entnommenes feststoffbelastetes Wasser einer groben Fest-Flüssigkeitstrennstute (2) zur Trennung von Feststoffen mit einem Trennkorndurchmesser im Millimeterbereich und nachfolgend einer Mikrofiltration (5) zur Schwebstoffabtrennung zugeführt wird, wobei die abgetrennten Feststoffe zumindest teilweise mit dem Retentat über das Kanalsystem (7) einer Kläranlage zugeführt und das gereinigte Wasser in natürliche Gewässer geleitet oder als Oberflächenwasser abgeführt wird.

2. Verfahren nach Anspruch 1,
dadurch gekennzeichnet, daß das zu reinigende Wasser mit erhöhtem Druck der Fest-Flüssigkeitstrennstufe (2) zugeführt wird, deren Trenukorndurchmesser im Bereich zwischen 0,5 bis 3 mm liegt.

3. Verfahren nach Anspruch 1 oder 2,
dadurch gekennzeichnet, daß das vorgereinigte Wasser nachfolgend zur groben Fest-Flüssigkeitstrennstufe (2) der Mikrofiltration (5) mit einem erhöhten Druck derart zugeführt wird, daß vor/in der Mikrofiltration (5) eine einer Deckschichtbildung abgelagerter Feststoffe auf einem Filter entgegenwirkende turbulente Strömung ausgebildet wird.

4. Verfahren nach einem der Ansprüche 1 bis 3,
dadurch gekennzeichnet, daß in der Mikrofiltration (5) Feststoffe mit einem Trennkorndurchmesser zwischen 0,5 und 100 µm aus dem Misch-, Ab- und/oder Regenwasser separiert werden.

5. Verfahren nach einem der Ansprüche 1 bis 4,
dadurch gekennzeichnet, daß das vorgereinigte Wasser aus der groben Fest-Flüssigkeitstrennstufe (2) einem Pufferbehälter (3) und aus diesem der Mikroflitration (5) zugeführt wird.

6. Verfahren nach einem der Ansprüche 1 bis 5,
dadurch gekennzeichnet, daß im Pufferbehälter (3) eine Sedimentation durchgeführt wird.

7. Verfahren nach einem der Ansprüche 1 bis 6,
dadurch gekennzeichnet, daß zumindest ein Teil des Schwebstoffe enthaltenden Retentats aus der Mikrofiltration (5) über eine Bypassleitung (8) und Pufferbehälter (3) im Kreislauf geführt wird.

8. Verfahren nach einem der Ansprüche 1 bis 7,
dadurch gekennzeichnet, daß der erforderliche Druck mittels Pumpen (1, 4) und/oder einer geodetischen Höhendifferenz erzeugt wird.

9. Vorrichtung zur Durchführung des Verfahrens nach einem der Ansprüche 1 bis 8,
**dadurch gekennzeichnet,**
daß eine Fest-Flüssigkeitstrennstufe (2) und eine Mikrofiltration (5) über Leitungen miteinander verbunden sind und das jeweils anfallende Retentat über Leitungen (9) zumindest teilweise in das Kanalsystem (7) rückführbar ist.

10. Vorrichtung nach Anspruch 9,
dadurch gekennzeichnet, daß vor der Fest-Flüssigkeitstrennstufe (2) und/oder der Mikrofiltration (5) Pumpen (1, 4) in die Leitung geschaltet sind.

11. Vorrichtung nach Anspruch 9 oder 10,
dadurch gekennzeichnet, daß zwischen Fest-Flüssigkeitstrennstufe (2) und Mikrofiltration (5) ein Pufferbehälter (3) angeordnet ist.

12. Vorrichtung nach einem der Ansprüche 9 bis 11,
dadurch gekennzeichnet, daß im Pufferbehälter (3) eine Füllstandsregelung vorhanden ist.

13. Vorrichtung nach einem der Ansprüche 9 bis 12,
dadurch gekennzeichnet, daß die Fest-Flüssigkeitstrennstufe (2) unter Verwendung von Bogensieben, als Hydrozyklon, Feinstrechen, Siebtrommel, Filtertrommel oder einer Kombination dieser Elemente ausgebildet ist.

14. Vorrichtung nach einem der Ansprüche 9 bis 13,
dadurch gekennzeichnet, daß die Mikrofiltration (5) ein Querfiltrationsapparat ist.

15. Vorrichtung nach Anspruch 14,
dadurch gekennzeichnet, daß der Querfiltrationsapparat eine Reihen- oder Parallelanordnung mehrerer Mikrofiltrationsmodule ist.

16. Vorrichtung nach Anspruch 14 oder 15,
dadurch gekennzeichnet, daß die Mikrofiltrationsmodule rohrförmig mit einer Filtermantelfläche ausgebildet sind.

17. Vorrichtung nach Anspruch 16,
dadurch gekennzeichnet, daß die Filter als Drahtmaschengewebe mit einer Maschenweite zwischen 1 und 100 µm ausgebildet sind.
